# EUROPÄISCHE PATENTSCHRIFT

(11) **EP 0 887 248 B1**
(45) Veröffentlichungstag und Bekanntmachung des Hinweises auf die Patenterteilung: **17.10.2001**
(21) Anmeldenummer: 98110163.7
(22) Anmeldetag: 04.06.1998
(51) Int. Cl.: B62D 65/00

(54) **Verfahren zur Herstellung einer Rohbaukarosserie**
Procedure for the manufacture of a body-in-white
Procédé de fabrication d'une carrosserie en brut

(30) Priorität: 24.06.1997 DE 19726723
(43) Veröffentlichungstag der Anmeldung: 30.12.1998
(73) Patentinhaber: DaimlerChrysler AG, 70567 Stuttgart (DE)
(72) Erfinder: Lehmann, Bernhard, Dr., 70567 Stuttgart (DE); Riestenpatt genannt Richter, Michael, 71149 Bondorf (DE)

(56) Entgegenhaltungen:
- DE-A- 19 510 763
- US-A- 4 778 098
- PATENT ABSTRACTS OF JAPAN vol. 012, no. 315 (M-735), 26. August 1988 & JP 63 087379 A (NISSAN MOTOR CO LTD), 18. April 1988

## Beschreibung

Die Erfindung betrifft ein Verfahren zur Herstellung einer Rohbaukarosserie für einen Personenkraftwagen, die eine mit zwei Längsträgern und einem Frontquerträger versehene Vorbaustruktur aufweist, wobei an die Längsträger ein Aggregatequerträger angesetzt wird, an dem untere Lenker einer Achse gelagert werden, wobei obere Lenker über zwei Konsolen mit Radeinbauten verbunden werden, die an die zugeordneten Längsträger angebunden werden.

Bei Mercedes-Benz Personenkraftwagen ist es bekannt, die Vorbaustruktur einer Rohbaukarosserie eines Personenkraftwagens mit einem als Integralträger bezeichneten Aggregatequerträger zu versehen, der von unten her an zwei Längsträger der Vorbaustruktur angebunden ist. Der Aggregatequerträger trägt insbesondere den Motor, die Lenkung und die unteren Lenker einer Achse, deren obere Lenker sind im Bereich von Radeinbaublechen der Vorbaustruktur, die mit den Längsträgern verbunden sind, gelagert. Da der Aggregatequerträger als getrenntes Bauteil nach der Fertigstellung der Vorbaustruktur bei der gesamten Fahrzeugmontage von unten an die Längsträger angesetzt wird, treten Toleranzen an den Federungs- und Dämpfungselementen sowie insbesondere zwischen den oberen und den unteren Lagerpunkten für die Lenker der Achse auf, die anschließend eine aufwendige Einstellung der Radstellungswinkel an der Achse erfordern.

Aufgabe der Erfindung ist es, ein Verfahren der eingangs genannten Art zu schaffen, das den Aufwand für Nacharbeiten erheblich reduziert.

Diese Aufgabe wird dadurch gelöst, daß die in Fahrzeuglängsrichtung hintereinander liegenden Lagerpunkte jedes Radeinbaus für die obere Lenkerlagerung durch ein Spannen des Radeinbaus auf ein definiertes Abstandsmaß bezüglich einer Mittenfixierung in Fahrzeugquerrichtung gebracht werden, und daß eine auf die Fahrzeuglängsrichtung bezogene gleiche Lage der Längsträger mit den im Einzelteil gestanzten Fixierlöchern in der Vorbaustruktur durch Anschlagen an den Anschlagflächen eingerichtet wird. Durch die erfindungsgemäße Lösung ist es möglich, den Aggregatequerträger weitgehend toleranzfrei anzubinden, wodurch spätere Nacharbeiten für die Einstellung der verschiedenen Achsgeometrien vermieden werden. Die erfindungsgemäße Lösung schafft somit eine exakt symmetrische Anordnung der Vorderachse durch die geeignete Wahl definierter Bezugspunkte. Beim Anbau der Radeinbauten mit den Längsträgern an die Rumpfkarosse werden diese an einer auf die Fahrzeuglängs- und -querrichtung bezogene Mittenfixierung der Vorbaustruktur in einem festen Abstand in Fahrzeugquerrichtung dazu parallel und in Fahrzeuglängsrichtung an einer Positionierkerbe angeschlagen. Durch die erfindungsgemäße Lösung ist es somit möglich, auf eine Erst - oder Grundeinstellung der Achsgeometrie prozeßsicher zu verzichten, wodurch Nacharbeiten vermieden werden. Erfindungsgemäß werden somit die Radeinbauten links und rechts am Längsträger parallel in Fahrzeuglängsrichtung relativ zu dem Positionierrahmen ausgerichtet. In Fahrzeugquerrichtung werden die Längsträger auf einen sehr genauen Abstand mit Hilfe der mit den Fixierhilfen im Preßteil eingebrachten Verbindungsstellen parallel fixiert. Dann wird der Vorderwagen zusammengeschweißt. Zur Einbringung der Befestigungsbohrungen für die oberen Querlenker für die Position in Fahrzeugquerrichtung relativ zu den unteren Achsanlenkpunkten werden im Bezug zum beschriebenen Fixiersystem im Längsträger die Fahrzeugquerrichtungsposition ausgemessen und relativ dazu werden in einem festen Abstand die Befestigungslöcher für die oberen Querlenker eingebracht.

In Ausgestaltung der Erfindung wird die Vorbaustruktur zur Rumpfkarosse auf einen Positionierrahmen achssymmetrisch zu einer Mittellängsachse ausgerichtet und verschweißt. Dadurch werden die Voraussetzungen dafür geschaffen, eine symmetrische Anordnung des Aggregatequerträgers und der verschiedenen Lagerpunkte der Vorderachse zu erzielen.

In weiterer Ausgestaltung der Erfindung wird der Aggregatequerträger mit den unteren Anlenkpunkten der Achse relativ zu den Konsolen am Radeinbau zur Befestigung der oberen Querlenker einer Achse ausgerichtet und positioniert. Dabei werden in Fahrzeuglängsrichtung Fixierpunkte an den Längsträgern und in Fahrzeugquerrichtung einer dieser Fixierpunkte zur Positionierung des Aggregatequerträgers im Fahrzeug relativ zu den Konsolen der oberen Lenker einer Achse genutzt. Auf dem Aggregatequerträger sind ebenfalls Fixierhilfen relativ zu den unteren Anlenkpunkten der Achse eingebaut, welche in die Fixierstellen an der Längsträgerstruktur der Karosse passen. Dadurch werden Toleranzen bei der Anbindung des Aggregatequerträgers an die Karosse stark reduziert.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt schematisch eine Draufsicht auf eine für das erfindungsgemäße Verfahren vorbereitete Vorbaustruktur einer Rohbaukarosserie eines Personenkraftwagens,
- Fig. 2: schematisch einen Aggregatequerträger, der zur Anbindung an den Längsträger der Vorbaustruktur nach Fig. 1 vorgesehen ist, und
- Fig. 3: schematisch einen Schnitt durch einen in der Darstellung nach Fig. 1 linken Vorbaustrukturbereich auf Höhe eines Radeinbaus.

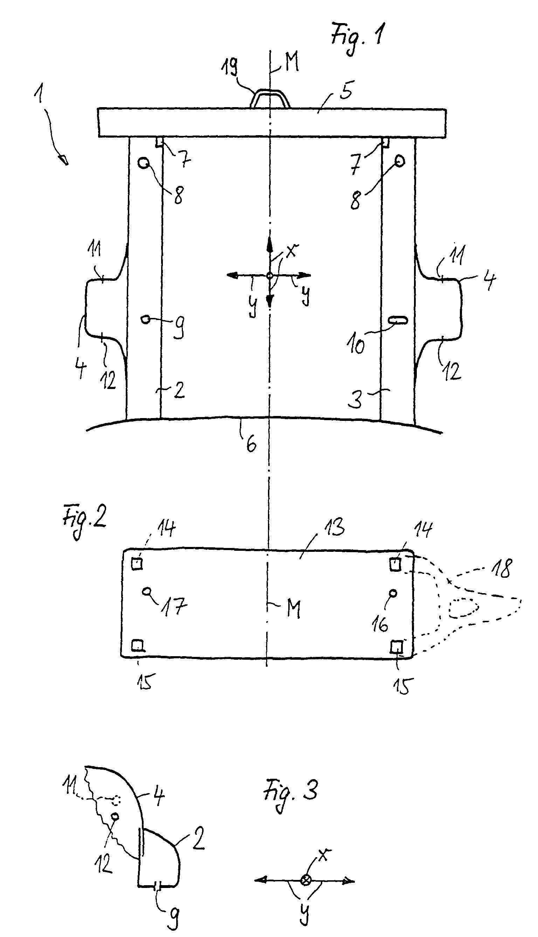

Eine Vorbaustruktur 1 für einen Personenkraftwagen weist zwei Längsträger 2, 3 auf, die an ihren vorderen Stirnenden durch einen Frontquerträger 5 miteinander verbunden sind. Rückseitig sind die Längsträger 2, 3 an eine Stirnwand 6 der Rohbaukarosserie angeschlossen. Mit jedem Längsträger 2, 3 ist ein Radeinbau 4 verbunden, die jeweils nicht näher dargestellte Aufnahmedome für Federbeine, Stoßdämpfer und andere Funktionselemente sowie Lagerpunkte 11, 12 für obere Lenker einer Achse aufweisen. Die unteren Lenker 18 der Achse werden gemäß Fig. 2 an einem als Integralträger 13 bezeichneten Aggregatequerträger gehalten, der außerdem ein Antriebsaggregat für den Personenkraftwagen, eine Lenkung sowie weitere Funktionselemente trägt. Der Integralträger 13 wird von unten her in nachfolgend näher beschriebener Weise an die Längsträger 2, 3 mit Hilfe von Schraubverbindungen oder andersartigen Verbindungselementen angebunden.

Zur Herstellung der Vorbaustruktur 1 werden zunächst als Unterbaugruppen die Längsträger 2, 3 mit den zugehörigen Radeinbauten 4 verbunden. Dazu weisen die Längsträger 2, 3 jeweils ein Anschlagelement 7 auf, mittels derer sie an einer entsprechenden Positionierstation in Fahrzeuglängsrichtung X fixiert werden. Gleichzeitig schlagen die Längsträger 2, 3 in Fahrzeugquerrichtung Y mit ihren Innenseiten an entsprechenden Anschlagflächen der Positionierstation an. Jeder Radeinbau 4 wird im Bereich von Befestigungsbohrungen oder Befestigungspunkten auf Höhe der Lagerpunkte 11, 12 in Fahrzeuglängsrichtung X fixiert. Nach dem Anschlagen der Konsole für Federbeine, Stoßdämpfer, obere Lenker und gegebenenfalls andere Funktionselemente und dem zugeordneten Längsträger 2, 3 wird jeder Radeinbau 4 mit dem zugehörigen Längsträger 2, 3 durch ein geeignetes Verbindungsverfahren, wie insbesondere Punktschweißung, verbunden.

Diese Unterbaugruppen werden in einem Positionierrahmen in einem vorderen Bereich mittels Anschlagelementen 7 in Fahrzeuglängsrichtung X und in Fahrzeugquerrichtung Y an den inneren Flächen der Längsträger sowie in ihrem rückseitigen Bereich an entsprechenden Flanschen einer Bodengruppe der Rohbaukarosserie fixiert. Anschließend wird die Unterbaugruppe an ihrer Frontseite mit dem Frontquerträger 5 und an ihrer Rückseite mit der Stirnwand 6 sowie mit der nicht dargestellten Bodengruppe verschweißt.

Zur ergänzenden Erläuterung der nachfolgend noch einmal dargestellten erfindungsgemäßen Lösung wird zunächst die Funktion des Standes der Technik kurz beschrieben, wobei eine Orientierung anhand der Bezugszeichen der Fig. 1 bis 3 vorgenommen wird. Zur Anbindung des Integralträgers 13 wird die Vorbaustruktur 1 mittels einer formschlüssigen Mittenfixierung 19 exakt symmetrisch zu einer Mittellängsachse M des als Positionierstation dienenden Positionierrahmens ausgerichtet. Diese Mittellängsachse M dient anschließend als Bezugsachse für die Positionierung eines Fixierloches 9 an einer Unterseite des linken Längsträgers 2, so daß das Fixierloch 9 in Fahrzeugquerrichtung Y einen definierten Abstand zur Mittellängsachse M erhält. In Fahrzeuglängsrichtung X wird ein definierter Abstand des Fixierloches 9 dadurch geschaffen, daß als Bezugspunkte definierte Lagerpunkte 12 für eine obere Querlenkerkonsole 12 gewählt wird und in dieser Ausrichtung wird das Fixierloch eingebracht, insbesondere gebohrt. Die exakte symmetrische Anordnung der Lagerpunkte 11, 12 wird bereits bei der Herstellung der Unterbaugruppen dadurch erzielt, daß die Radeinbauten in Fahrzeuglängsrichtung X auf ein definiertes Abstandsmaß beim Schweißen gespannt werden. Somit wird die geometrische Mitte zwischen dem Lagerpunkt 11 und dem Lagerpunkt 12 definiert, so daß bei den gegenüberliegenden Radeinbauten keine Abweichung der Abstandsmaße zwischen den Lagerpunkten 11 und 12 auftreten können. Im rechten Längsträger ist ein sich in Querrichtung Y erstreckendes Fixierlangloch in Einzelteile gestanzt worden. Um nun im Bereich der Lagerpunkte 11, 12 die Aufnahme für die Konsolen des oberen Querträgers zu stanzen, wird eine feste Anschlagfläche in Fahrzeugquerrichtung Y auf dem Positionierrahmen der Karosse verwendet. Dazu werden in einer festen maßlichen Zuordnung die Lagerpunkte 11, 12 beidseitig eingebracht.

Der Gegenstand der vorliegenden erfindungsgemäßen Lösung ist es numehr, das im Einzelteil eingebrachte Fixierloch 9 in einem Längsträger 2 zur Fixierung in Fahrzeugquerrichtung Y für das anschließende Einbringen der oberen Lenkerpunkte 11 und 12 zu nutzen. Das Einbringen kann durch Stanzen, Bohren, Lasern oder andere Arbeitsschritte erfolgen. Das Fixierloch 9 dient auch als Bezugskoordinate in Querrichtung Y für die Stanzung der Aufnahme der gegenüberliegenden Lagerpunkte 11, 12 des rechten Längsträgers 3. Am Integralträger 13 sind die Aufnahmen 14 und 15 für die Konsolen der unteren Querlenker 18 bereits vorhanden. Die zu den Fixierpunkten 9 und 10 der Längsträger 2, 3 korrespondierenden formschlüssigen Fixierungen 16 und 17 des Integralträgers 13 werden nun folgendermaßen auf den Integralträger 13 positioniert. Die Mitte zwischen den gegenüberliegenen Aufnahmen der unteren Querlenker 18 wird in Längsrichtung als Mittelachse M definiert. Der Abstand des linken Fixierstiftes 17 zu dieser als Bezugskoordinate gewählten geometrischen Mittelachse ist nun definierbar und entspricht dem Abstand etwa zur Querrichtung Y des Fixierloches 9 zur Mittelachse M an der Karosse. Die Koordinate für den Fixierstift 17 und den Fixierstift 16 in Fahrzeuglängsrichtung X wird dadurch definiert, daß als Bezugspunkt die Aufnahmen 15 verwendet werden. Die Positionierung der Fixierung 16 in Fahrzeugquerrichtung Y kann toleranzbehaftet sein, da der zugeordnete Fixierpunkt am Längsträger 3 das Langloch 10 ist. Anschließend können die notwendigen Maßnahmen getroffen werden, um den Integralträger 13, der mittels der Fixierpunkte bereits exakt zur Vorbaustruktur 1 ausgerichtet ist, an die Längsträger 2, 3 anzuschrauben oder in anderer Art und Weise zu befestigen.

## Patentansprüche

1. Verfahren zur Herstellung einer Rohbaukarosserie für einen Personenkraftwagen, die eine mit zwei Längsträgern (2, 3), und einem Frontquerträger (5), versehene Vorbaustruktur (1) aufweist, wobei an die Längsträger ein Aggregatequerträger (13) angesetzt wird, an dem untere Lenker einer Achse gelagert werden, wobei obere Lenker über zwei Konsolen mit Radeinbauten verbunden werden, die an die zugeordneten Längsträger angebunden werden,
**dadurch gekennzeichnet,**
**daß** die in Fahrzeuglängsrichtung hintereinander liegenden Lagerpunkte (11, 12) jedes Radeinbaus (4) für die obere Lenkerlagerung durch ein Spannen des Radeinbaus (4) auf ein definiertes Abstandsmaß bezüglich einer Mittenfixierung (19) in Fahrzeugquerrichtung gebracht werden, und daß eine auf die Fahrzeuglängsrichtung bezogene gleiche Lage der Längsträger mit den im Einzelteil gestanzten Fixierlöchern (9, 10) in der Vorbaustruktur (1) durch Anschlagen an den Anschlagflächen (7) eingerichtet wird.

2. Verfahren nach Anspruch 1,
**dadurch gekennzeichnet, daß**
die Längsträger mit ihren im Einzelteil eingebrachten Anschlagflächen (7) in Fahrzeuglängsrichtung (X) und parallel zur Mittelachse (M) an die Rumpfkarosse angebracht werden.

3. Verfahren nach Anspruch 1 oder 2,
**dadurch gekennzeichnet, daß**
die Vorbaustruktur auf einem Positionierrahmen achssymmetrisch zu einer Mittellängsachse der Rumpfkarosse ausgerichtet und mit dieser verbunden wird.

4. Verfahren nach Anspruch 1, 2 oder 3,
**dadurch gekennzeichnet, daß**
die Fixierpunkte (9, 10) an einem Längsträger (2, 3) für die Positionierung des Aggregatequerträger (13) in Fahrzeuglängsrichtung X durch die Anschlagstellen (7) als Bezugspunkte ausgewählt und damit der Aggregatequerträger an den Längsträgern funktionsorientiert sowie rechtwinklig zur Fahrzeuglängsachse (X) positioniert ist.

5. Verfahren nach Anspruch 4,
**dadurch gekennzeichnet, daß**
der Fixierpunkt (9) in Fahrzeugquerrichtung (Y) als Bezugspunkt für die Positionierung der Aufnahmepunkte an den Längsträgern (2, 3) zur Festlegung des Aggregatequerträgers ausgewählt wird.

6. Verfahren nach einem der vorhergehenden Ansprüche,
**dadurch gekennzeichnet, daß**
Löcher (11, 12) zur Aufnahme der oberen Lenker in Radeinbauten (4) auf beiden Karossieseiten in einem festen Maß zu einer linken Fixierstelle symmetrisch zu der Mittellängsachse der Achse eingebracht werden.

7. Verfahren nach Anspruch 6,
**dadurch gekennzeichnet, daß**
das Fixierloch (9) im Längsträger (2) in Fahrzeugquerichtung (Y) ausgemessen wird und die Löcher (11, 12) in Fahrzeugquerrichtung (Y) relativ zum gemessenen Fixierloch (9) eingebracht werden.

## Claims

1. Method of manufacturing preliminary bodywork for a motor car, which has a preliminary structure fitted with two longitudinal carriers (2, 3) and a front cross member (5), wherein on the longitudinal carriers an aggregate cross member (13) is placed, on which lower steering members of an axle are arranged, wherein upper steering members are connected through two consoles with wheel installations, which are connected on the assigned longitudinal carriers,
**characterised in that**
the bearing points (11, 12) of each wheel installation (4) lying behind each other in the vehicle longitudinal direction for the upper steering member bearing are brought through a tightening of the wheel installation (4) to a defined distance in relation to a middle fixing (19) in the vehicle cross direction, and that an equal position of the longitudinal carriers in relation to the vehicle longitudinal direction is set with the fixing holes (9, 10) stamped in the individual component in the preliminary structure (1) through impacting on the stop surfaces (7).

2. Method according to Claim 1
**characterised in that**
the longitudinal carriers with their stop surfaces (7) arranged in the individual component are secured in the vehicle longitudinal direction (X) and parallel to the middle axis (M) on the body.

3. Method according to Claim 1 or 2
**characterised in that**
the preliminary structure is arranged on a positioning frame axis-symmetrically to a middle longitudinal axis of the body and is connected with this.

4. Method according to Claim 1, 2 or 3
**characterised in that**
the fixing points (9, 10) on a longitudinal carrier (2, 3) for the positioning of the aggregate cross member (13) in the vehicle longitudinal direction X are selected through the stop points (7) as reference points and therefore the aggregate cross member is positioned on the longitudinal carriers in a functionally orientated way as well as at right angles to the vehicle longitudinal axis (X).

5. Method according to Claim 4
**characterised in that**
the fixing point (9) is selected in the vehicle cross direction (Y) as a reference point for the positioning of the receiving points on the longitudinal carriers (2, 3) for fixing the aggregate cross member.

6. Method according to any one of the preceding claims
**characterised in that**
holes (11, 12) for receiving the upper steering members are arranged in wheel installations (4) on both bodywork sides at a fixed degree to a left fixing point symmetrically to the middle longitudinal axis of the axis.

7. Method according to Claim 6
**characterised in that**
the fixing hole (9) in the longitudinal carrier (2) is measured in the vehicle cross direction (Y) and the holes (11, 12) are arranged in the vehicle cross direction (Y) relative to the measured fixing hole (9).

## Revendications

1. Dispositif de fabrication brute pour une voiture particulière, qui présente une structure de partie avant (1) munie de deux longerons (2, 3) et d'une traverse avant (6), sur les longerons étant montés une traverse pour groupe (13), sur laquelle sont montés des bras articulés inférieur d'un essieu, des bras supérieur étant reliés par deux consoles à des équipements de roue, liée aux longerons associés, **caractérisé en ce que** les points de tourillonnement (11, 13), placés les uns derrière les autres dans la direction longitudinale du véhicule, de chaque équipement de roue (4), pour le montage de bras articulés supérieurs sont placés, grâce à un bridage de l'équipement de roue (4), à une valeur d'espacement définie par rapport à une fixation centrale (19) dans la direction transversale du véhicule, et **en ce qu'**une position identique, se référant à la position longitudinale du véhicule, des longerons munis des trous de fixation (9, 10), percés par estampage dans la pièce individuelle, étant respectée dans la structure de partie avant (1) par mise en butée sur les faces de butée (7).

2. Procédé selon la revendication 1, **caractérisé en ce que** les longerons sont montés sur la carrosserie, avec leur surface de butée (7) introduite dans la partie individuelle, dans la direction longitudinale de véhicule (X) et parallèlement à l'axe médian (M).

3. Dispositif selon la revendication 1 ou 2, **caractérisé en ce que** la structure de partie avant est placée sur un cadre de positionnement, de façon axialement symétrique par rapport à un axe longitudinal médian de la carrosserie, et est reliée à celle-ci.

4. Procédé selon la revendication 1, 2 ou 3, **caractérisé en ce que** les points de fixation (9, 10), aménagés sur un longeron (2, 3) pour le positionnement de la traverse de groupe (13) dans la direction longitudinale de véhicule X sont sélectionnés par les points de mise en butée (7) servant de point de référence et, ainsi, la traverse de groupe est positionnées sur les longerons, en étant orientée fonctionnellement ainsi qu'à angle droit par rapport à l'axe longitudinal de véhicule (X).

5. Procédé selon la revendication 4, **caractérisé en ce que** le point de fixation (9) dans la direction transversale du véhicule (Y), est sélectionné à titre de point de référence pour le positionnement des points supports sur les longerons (2, 3) pour la fixation de la traverse de groupe.

6. Procédé selon l'une des revendications précédentes, **caractérisé en ce que** les trous (11, 12) pour supporter les bras articulés supérieurs dans les équipements de roue (4) situés sur les deux côtés de carrosserie, sont ménagés à une distance fixe par rapport à un point de fixation gauche, symétriquement par rapport à l'axe longitudinal médian de l'axe.

7. Procédé selon la revendication 6, **caractérisé en ce que** le trou de fixation (9) ménagé dans le longeron (2), dans la direction transversale de véhicule (Y), est mesuré et les trous (11, 12) sont aménagés dans la direction transversale de véhicule (Y), par rapport à la mesure faite au sujet du trou de fixation (9).
